# EUROPÄISCHE PATENTSCHRIFT

(11) **EP 1 645 179 B1**
(45) Veröffentlichungstag und Bekanntmachung des Hinweises auf die Patenterteilung: **11.08.2010**
(21) Anmeldenummer: 05018043.9
(22) Anmeldetag: 19.08.2005
(51) Int. Cl.: A01G 9/02

(54) **Blumenkasten mit Zwischenboden, insbesondere aus Kunststoff**
Planter box with intermediate bottom, especially in plastic
Jardinière avec double fond, notamment en plastique

(30) Priorität: 06.10.2004 DE 202004015495 U
(43) Veröffentlichungstag der Anmeldung: 12.04.2006
(73) Patentinhaber: Geli Thermo Plastic Gebr. Lippert GmbH, 63755 Alzenau-Michelbach (DE)
(72) Erfinder: Lippert, Thomas, 63755 Alzenau (DE)
(74) Vertreter: Schubert, Siegmar

(56) Entgegenhaltungen:
- EP-A- 1 198 984
- DE-A1- 19 818 671
- US-A- 4 077 159
- US-A- 4 102 081
- US-A- 5 042 197

## Beschreibung

Die Erfindung betrifft einen Blumenkasten mit in diesen einsetzbaren Zwischenboden, insbesondere aus Kunststoff, nach dem Oberbegriff des Anspruchs 1 .

Es ist ein derartiger Blumenkasten bekannt, wobei aus einem Boden des Blumenkastens zentral hohle Überlaufdome und aus einem Boden des Untersetzers Formelemente als Fußelemente ausgeformt sind (Broschüre der Anmelderin "Gartenprodukte" 2004). In den Blumenkasten kann ein Zwischenboden eingesetzt werden, der insbesondere zur Bewässerung dient und daher auch als Bewässerungszwischenboden bezeichnet wird. Der eingesetzte Zwischenboden stützt sich auf den zentralen hohlen Überlaufdomen ab und erstreckt sich mit seinem Rand bis zur Innenwand des Blumenkastens, wo er auf einzelnen Stegen oder einer umlaufenden Erhebung aufliegt, die aus der Wand des Blumenkastens ausgeformt sind. Aus dem Zwischenboden können nach oben offene Ansaugkegel ausgeformt sein, die mit Erde über dem Zwischenboden gefüllt sind und seitlich geöffnet sind, um Wasser aus dem Bereich zwischen dem Zwischenboden und dem Boden des Blumenkastens aufzunehmen. Die aus dem Boden des Blumenkastens zentral ausgeformten hohlen Überlaufdome sind unten und oben seitlich offen, um überschüssiges Wasser aus dem Blumenkasten abzuleiten. Die Dome weisen ferner auf ihrer Oberseite ausgeformte Domerhebungen auf, die in aus dem Zwischenboden ausgeformte Öffnungen form- und kraftschlüssig hineinreichen, um den Zwischenboden sicher, aber lösbar in dem Blumenkasten zu halten. Die aus der Innenwand vorstehenden Stege oder die vorspringende umlaufende Erhebung können jedoch stören, wenn insbesondere zur Lagerhalterung und zum Transport mehrere Blumenkästen gegebenenfalls zusammen mit ihren Untersetzern gestapelt werden sollen, da sie ein tiefes Absenken eines Blumenkastens bzw. des mit ihm verbundenen Untersetzers in einen anderen Blumenkasten beeinträchtigen. Das Dokument EP-A-1 198 984 offenbart auch einen Blumenkasten mit Zwischenboden.

Der vorliegenden Erfindung liegt die Aufgabe zugrunde, einen Blumenkasten mit Zwischenboden gemäß dem Oberbegriff des Anspruchs 1 zu schaffen, der diesen Nachteil vermeidet und einerseits eine gute Stapelbarkeit der Blumenkästen mit Untersetzer, andererseits aber eine zuverlässige, stabile Halterung eines Zwischenbodens in jeweils einem Blumenkasten gestattet.

Diese Aufgabe wird für einen Blumenkasten mit den in dem kennzeichnenden Teil des Anspruchs 1 angegebenen Merkmalen gelöst. Danach kann ein Zwischenboden in dem Blumenkasten nur durch dessen zentrale Erhebungen bzw. hohle Dome zuverlässig gehalten werden, da eine störende Verformung bzw. Verwindung des Zwischenbodens, insbesondere Absenken an dessen Randbereich, auch bei größerer Belastung durch aufgefüllte Erde und eingesetzte Pflanzen durch eine aus dem Randbereich des Zwischenbodens ausgeformte umlaufende Wandversteifung verhindert wird. Die Innenwände des Blumenkastens sind zumindest in den Innenwandbereichen, die an den eingesetzten Zwischenboden angrenzen, glattflächig, das heißt frei von Vorsprüngen oder Erhebungen. Die glatten Innenwände ermöglichen eine gute Stapelbarkeit der Blumenkästen gegebenenfalls mit Untersetzern ineinander. - Zwar ist eine umlaufende Vertiefung im Randbereich eines Zwischenbodens, die versteifend wirken kann, an sich bekannt; dieses Vormerkmal des Zwischenbodens wurde jedoch nicht gezielt genutzt, um auf Stege, Vorsprünge oder eine umlaufende Erhebung an den Innenwänden des Blumenkastens zu verzichten, auf denen sich der Randbereich des Zwischenbodens abstützen kann.

Bevorzugte Ausbildungen des Zwischenbodens und des Blumenkastens sind in den Unteransprüchen angegeben.

Insbesondere kann gemäß Anspruch 2 die Randversteifung eine umlaufende nutförmige Vertiefung des Zwischenbodens sein. Diese Ausbildung ist fertigungsgünstig, materialsparend und behindert die Stapelbarkeit der mit Zwischenboden und gegebenenfalls Untersetzer zusammengesetzten Blumenkästen am wenigsten.

Der Zwischenboden kann nach Anspruch 3 zentrale Öffnungen aufweisen, in die jeweils eine entsprechende aus der Oberseite der Dome ausgeformte Domerhebung paßt. Damit wird eine genaue Zentrierung des Zwischenbodens in dem Blumenkasten und eine formschlüssige Halterung erreicht.

Die symmetrische Anordnung der aus dem Boden des Blumenkastens ausgeformten hohlen Dome mit ihren Domerhebungen und demgemäß auch die symmetrische Anordnung der zentralen Öffnungen in dem Zwischenboden ist Gegenstand des Anspruchs 4. Durch die symmetrische Anordnung der hohlen Dome und die entsprechende Anordnung der Öffnungen in dem Zwischenboden wird erreicht, daß der Zwischenboden ohne größere Aufmerksamkeit sicher passend in den Blumenkasten eingesetzt werden kann.

Bevorzugt sind die zentralen hohlen Dome, wie an sich bekannt, aus dem Boden des Blumenkastens, sich nach oben erstreckend und unten offen ausgeformt, wobei die hohlen Dome auch oben teilweise offen sein können, um als Überlaufdome zu dienen. Sie können in Verbindung mit Ansaugkegeln, die aus dem Zwischenboden sich nach unten erstreckend hohl, oben sowie seitlich offen ausgeformt sind, ein Bewässerungssystem bilden. Hierzu sind die Ansaugkegel mit Erde gefüllt, die mit der Erde über dem Zwischenboden in Verbindung steht, und sie reichen in einen Wasservorrat zwischen dem Boden des Blumenkastens und dem Zwischenboden.

Die Ansaugkegel können im Abstand oberhalb des Bodens des Blumenkastens enden, wenn sich der Zwischenboden in dem Blumenkasten auf den Domen abstützt, weil der Zwischenboden wegen seiner Versteifung nicht zusätzlich etwa durch lange, unförmige Ansaugkegel abgestützt zu werden braucht. - Überschüssiges Wasser des Wasservorrats kann in dem Bewässerungssystem durch die als Überlaufdome ausgebildeten Dome nach unten abfließen.

Ein Ausführungsbeispiel der Erfindung wird im folgenden anhand einer Zeichnung mit zwei Figuren beschrieben, woraus sich weitere Konkretisierungen der Formmerkmale der Erfindung ergeben können. Es zeigen:
- Figur 1: einen Querschnitt durch den Blumenkasten mit Untersetzer und eingesetztem Zwischenboden und
- Figur 2: zwei Blumenkästen mit eingesetzten Zwischenböden und angesetzten Untersetzern in gestapeltem Zustand.

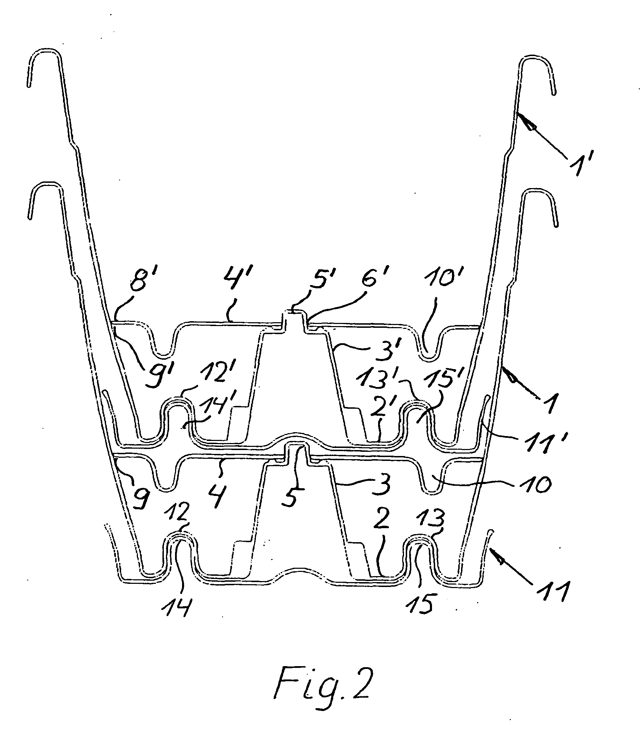

Der zweite Blumenkasten mit zugehörigen Teilen, der in Figur 2 dargestellt ist, trägt abgewandelte Bezugsziffern des ersten Blumenkastens und dessen zugehöriger Teile.

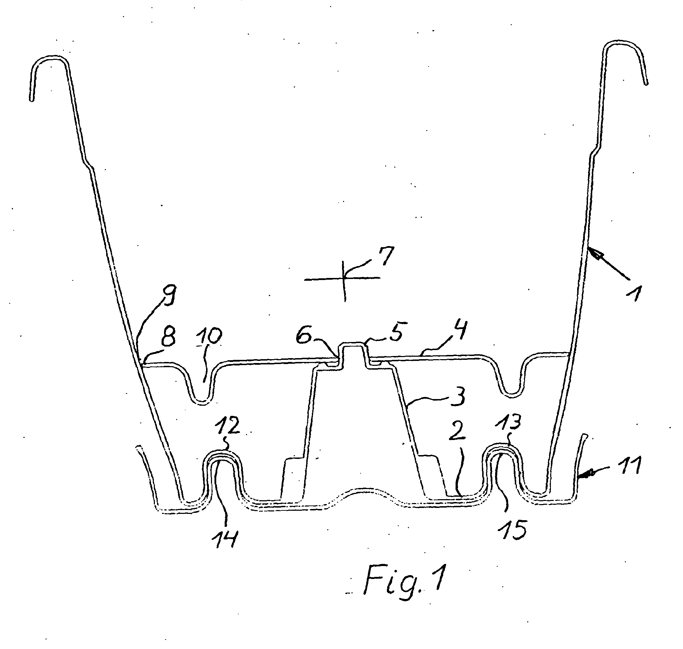

In den Figuren 1 und 2 ist mit 1, 1' ein Blumenkasten aus Kunststoff bezeichnet, aus dessen Boden 2, 2' sich nach oben erstreckende, unten offene Dome 3, 3' ausgeformt sind, wobei auf wenigstens zwei Dome jeweils ein Zwischenboden 4, 4' aufgesetzt werden kann. Zum sicheren Halten des Zwischenbodens in den Blumenkasten 1, 1' sind die Dome 3, 3' mit Domerhebungen 5, 5' ausgeformt, die in Öffnungen 6, 6' in dem Zwischenboden 4, 4' form- und kraftschlüssig passen. Zum einfachen Einfügen des Zwischenbodens in den Blumenkasten 1, 1 ' sind die Dome 3, 3' mit ihren Domerhebungen 5, 5' in der mittleren Längsachse 7 des Blumenkastens angeordnet und dementsprechend auch die kappenförmigen Erhebungen 6, 6' in dem Zwischenboden 4, 4' symmetrisch angeordnet.

Der in den Blumenkasten 1, 1' eingesetzte Zwischenboden 4, 4' wird im wesentlichen nur durch die zugehörigen Dome 3, 3' getragen, da ein Rand 8, 8' des Zwischenbodens an einen glatten Innenwandbereich 9, 9' ohne Stege oder sonstige Erhebung, auf denen er aufliegen könnte, angrenzt. Damit der Zwischenboden trotzdem Belastungen insbesondere durch Erde und/oder eingesetzte Pflanzen sicher tragen kann, weist er eine Randversteifung in Form einer umlaufenden nutförmigen Vertiefung 10, 10' auf, die aus dem Zwischenboden 4, 4' sich nach unten erstreckend ausgeformt ist.

Aus Figur 2 kann ersehen werden, wie vor dem bestimmungsgemäßen Gebrauch der Blumenkästen 1, 1', also zum Beispiel für deren Lagerhaltung und Transport insbesondere auf einer Palette die Blumenkästen zusammen mit deren Zwischenböden 4, 4' und Untersetzern 11, 1 1 ' kompakt raumsparend zusammengesetzt werden können und somit eine Einheit bilden.

Zur lösbaren Verbindung eines Blumenkastens 1, 1' mit einem Untersetzer 11, 11' sind aus dem Boden 2, 2' des Blumenkastens hohle Erhebungen ausgeformt, die sich nach oben verjüngend erstrecken, und von denen in Figur 1 die Erhebungen 12, 13 sichtbar sind. Die Erhebungen sind insgesamt symmetrisch zu der mittleren Längsachse 7 und einer nicht dargestellten mittleren Querachse angeordnet. Dem entspricht eine Anordnung von Erhebungen 14, 15, die sich nach oben erstreckend aus dem Untersetzer 11 ausgeformt sind und die in die Erhebungen 12, 13 des Blumenkastens passen.

Aus der Zeichnung nicht zu ersehen ist, daß aus dem Zwischenboden 4, 4' sich nach unten erstreckende, hohle Ansaugkegel ausgeformt sein können, die oben an dem Zwischenboden offen sind und Erde aufzunehmen, die auf den Zwischenboden aufgebracht ist. Wie erwähnt können die Ansaugkegel Wasser aus dem Bereich zwischen dem Zwischenboden 4, 4' und dem Boden 2, 2' des Blumenkastens aufnehmen. Überschüssiges Wasser kann durch die Dome 3, 3' nach unten abfließen, wenn diese - in der Zeichnung nicht ersichtlich - oben stellenweise offen sind.

### Bezugszeichenliste

- 1, 1 ': Blumenkasten
- 2, 2': Boden
- 3, 3': Dom
- 4, 4': Zwischenboden
- 5, 5': Domerhebung
- 6, 6': Öffnung
- 7: mittlere Längsachse
- 8, 8': Rand des Zwischenbodens
- 9, 9': Innenwandbereich
- 10, 10': umlaufende Vertiefung
- 11 , 11': Untersetzer
- 12, 12': Erhebung
- 13, 13': Erhebung
- 14, 14': Erhebung
- 15, 15': Erhebung

## Patentansprüche

1. Blumenkasten mit in diesen einsetzbaren Zwischenboden (4, 4'), wobei aus einem Boden (2, 2') des Blumenkastens (1, 1') zentrale Erhebungen, insbesondere hohle Dome (3, 3') ausgeformt sind, auf denen sich der eingesetzte Zwischenboden (4, 4') abstützt,
**dadurch gekennzeichnet,**
**daß** aus einem Randbereich (8, 8') des Zwischenbodens (4, 4') eine umlaufende Randversteifung ausgeformt ist und daß Innenwände des Blumenkastens zumindest in Innenwandbereichen (9, 9'), die an den eingesetzten Zwischenboden (4, 4') angrenzen, glattflächig sind.

2. Blumenkasten nach Anspruch 1,
**dadurch gekennzeichnet,**
**daß** die Randversteifung eine umlaufende nutförmige Vertiefung (10, 10') des Zwischenbodens (4, 4') ist.

3. Blumenkasten nach wenigstens einem der Ansprüche 1 und 2,
**dadurch gekennzeichnet,**
**daß** der Zwischenboden (4, 4') zentrale Öffnungen (6, 6') aufweist, in die jeweils eine entsprechende, aus der Oberseite der Dome (3, 3') ausgeformte Domerhebung (5, 5') paßt.

4. Blumenkasten nach Anspruch 3,
**dadurch gekennzeichnet,**
**daß** die aus dem Boden (2, 2') des Blumenkastens (1, 1') ausgeformten hohlen Dome (3, 3') mit ihren Domerhebungen (5, 5') in einer mittleren Längsachse (7) des Blumenkastens und symmetrisch zu dessen mittlerer Querachse angeordnet sind und demgemäß auch die Öffnungen (6, 6') in dem Zwischenboden (4, 4') symmetrisch angeordnet sind.

5. Blumenkasten nach wenigstens einem der Ansprüche 1-4,
**dadurch gekennzeichnet,**
**daß** die zentralen hohlem Dome (3, 3') aus dem Boden (2, 2') des Blumenkastens (1, 1') sich nach oben erstreckend und unten offen ausgeformt sind und daß die hohlen Dome (3, 3') als Überlaufdome auch oben teilweise offen sind.

## Claims

1. Planter box with an intermediate bottom (4, 4') to be inserted into it, wherein from a bottom (2, 2') of said planter box (1,1') central elevations, particularly hollow domes (3, 3'), are formed out on which said inserted intermediate bottom (4, 4') is supported,
**characterized in**
**that** from a peripheral area (8, 8') of said intermediate bottom (4, 4'), a circumferential edge reinforcement is formed out and that inside walls of said planter box have smooth planes, at least in the inside wall areas (9, 9') which adjoin said inserted intermediate bottom (4, 4').

2. Planter box according to claim 1,
**characterized in**
**that** said edge reinforcement constitutes a circumferential groove shaped indentation (10, 10') of said intermediate bottom (4, 4').

3. Planter box according to at least one of claims 1 and 2,
**characterized in**
**that** said intermediate bottom (4, 4') includes central holes (6, 6') into which a corresponding dome elevation (5, 5') formed out on the upper side of said domes (3, 3') fits in.

4. Planter box according to claim 3,
**characterized in**
**that** said hollow domes (3, 3') together with the dome elevations (5, 5') thereof formed out of from said bottom (2, 2') of said planter box (1, 1') are arranged on a central longitudinal axis (7) of said planter box and symmetrical to the central transverse axis thereof and that, therefore, said holes (6, 6') in said intermediate bottom (4, 4') are symmetrically disposed as well.

5. Planter box according to at least one of claims 1 through 4,
**characterized in**
**that** said central hollow domes (3, 3') are formed out upwardly extending from said bottom (2, 2') of said planter box (1, 1') and open at the base, and that said hollow domes (3, 3') as overflow domes are partly open on top as well.

## Revendications

1. Jardinière comportant des fonds intermédiaires (4, 4') pouvant être insérés dans celle-ci, dans laquelle sont formés à partir d'un fond (2, 2') de la jardinière (1, 1') des élévations centrales, en particulier des dômes creux (3, 3') sur lesquels s'appuient les fonds intermédiaires (4, 4') insérés, **caractérisée en ce qu'**à partir d'une zone de bordure (8, 8') du fond intermédiaire (4, 4') est formé un renfort de bord périphérique et **en ce que** des parois internes de la jardinière sont à surface lisse au moins dans les zones de paroi interne (9, 9') qui sont contiguës aux fonds intermédiaires (4, 4') insérés.

2. Jardinière selon la revendication 1, **caractérisée en ce que** le renfort de bordure est un renfoncement périphérique en forme de rainure (10, 10') du fond intermédiaire (4, 4').

3. Jardinière selon au moins l'une des revendications 1 et 2, **caractérisée en ce que** le fond intermédiaire (4, 4') présente des ouvertures centrales (6, 6') dans lesquelles s'adapte une élévation en dôme (5, 5') respective correspondante formée à partir de la face supérieure des dômes (3, 3').

4. Jardinière selon la revendication 3, **caractérisée en ce que** les dômes creux (3, 3') formés à partir du fond (2, 2') de la jardinière (1, 1') sont disposés par leurs élévations en dôme (5, 5') dans un axe longitudinal médian (7) de la jardinière et symétriquement par rapport à son axe transversal médian, et par conséquent **en ce que** les ouvertures (6, 6') dans le fond intermédiaire (4, 4') sont aussi disposées symétriquement.

5. Jardinière selon au moins l'une des revendications 1 à 4, **caractérisée en ce que** les dômes creux centraux (3, 3') sont formés à partir du fond (2, 2') de la jardinière (1, 1') en s'étendant vers le haut et ouverts en bas, et **en ce que** les dômes creux (3, 3') sont aussi ouverts partiellement en haut en tant que dômes de débordement.
